(19)

Europäisches
Patentamt
European
Patent Office
Office européen
des brevets

(11)  **EP 2 696 526 A2**

(12)  **EUROPEAN PATENT APPLICATION**

(43) Date of publication:
**12.02.2014 Bulletin 2014/07**

(51) Int Cl.:
**H04L 1/00** *(2006.01)*          **H04L 1/18** *(2006.01)*

(21) Application number: **12180172.4**

(22) Date of filing: **10.08.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 11.08.2011  US 201161522434 P
30.09.2011  US 201161541848 P
04.11.2011  US 201161555572 P
07.11.2011  US 201161556356 P
19.06.2012  US 201213527017
29.09.2011  US 201113248638

(71) Applicant: **BlackBerry Limited**
**Waterloo, ON N2K 0A7 (CA)**

(72) Inventors:
• **Heo, Youn Hyoung**
  **Gyunggi-do 443-707 (KR)**
• **Harrison, Robert Mark**
  **Irving, TX 75039 (US)**

(74) Representative: **Moore, Barry et al**
  **Hanna Moore & Curley**
  **13 Lower Lad Lane**
  **Dublin 2 (IE)**

(54)  **Method and system for uplink control channel transmit diversity using multiple downlink control channel based resource allocation**

(57)    A method and network element for allocating uplink resources for hybrid automatic repeat request acknowledgement at a user equipment (UE), the method indicating a first set of uplink resources to the user equipment; and indicating a first subset of the first set of uplink resources that the UE may transmit upon using a position of a first downlink control channel (DCCH) scheduling a downlink shared channel (DSCH) on a cell. Further, a method at a user equipment (UE) for receiving an allocation of uplink resources for HARQ acknowledgement, the method receiving a first set of uplink resources; deriving a first subset of uplink resources that the UE may transmit upon using downlink control information bits within a first downlink control channel on a primary cell, and deriving a second subset of the first set of uplink resources that the UE may transmit upon within a second downlink control channel.

FIG. 4

**EP 2 696 526 A2**

## Description

### RELATED APPLICATIONS

The present Application relates to US provisional Patent Application No. 61/556,356, filed Nov. 7, 2011, and further claims priority to U.S. Provisional Patent Application No. 61/522,434, filed August 11, 2011; U.S. Patent Application No. 13/248,638, filed September 29, 2011; U.S. Provisional Patent Application No. 61/541,848, filed September 30, 2011; and U.S. Provisional Patent Application No. 61/555,572, filed November 4, 2011. The disclosures of the above applications are incorporated herein by reference in their entireties.

### FIELD OF THE DISCLOSURE

The present disclosure relates to resource allocation and in particular relates to resource allocation for uplink transmit diversity.

### BACKGROUND

Spatial transmit diversity utilizes a plurality of antennas to send a signal. Because the signals sent from different transmit antennas interfere with one another at the receiver, additional signal processing is needed at both the transmitter and receiver in order to achieve diversity while removing or at least attenuating the spatial interference.

Multiple antenna transmit diversity is often categorized into two classes: open-loop and closed-loop. Open-loop refers to systems that do not require knowledge of the channel at the transmitter.

One issue for many open loop channel selection transmission diversity schemes is that distinct PUCCH resource is transmitted on each antenna. Therefore, at least two resources must be indicated from a cell from each open loop transmission diversity user equipment. This is straightforward for channel selection using LTE Rel-10 time division duplex (TDD) resource allocation when Hybrid Automatic Repeat Request (HARQ)-ACK bits (also  called Ack/Nack bits) correspond to one physical downlink shared channel (PDSCH) subframe, for example when spatial multiplexing is used with $M$=1, or Ack/Nack Resource indicator (ARI) based resource allocation is used, since in these modes two physical uplink control channel (PUCCH) resources are indicated with one PDCCH.

However, when two PDCCHs are used to indicate two PUCCH resources from one cell when $M$>1, the issue is not as straightforward since Rel-10 TDD implicit resource allocation indicates one PUCCH resource independently per physical downlink control channel (PDCCH).

### BRIEF DESCRIPTION OF THE DRAWINGS

The present disclosure will be better understood with reference to the drawings, in which:

Figure 1 is a diagram of a conventional subframe having the structure of PUCCH formats 1 a and 1 b with normal cyclic prefix;
Figure 2 is a diagram of conventional explicit and implicit signaling for designating PUCCH for use by a user equipment device;
Figure 3 is a block diagram showing a resource selection transmission diversity transmitter;
Figure 4 is a flow diagram for implicit-explicit resource indication;
Figure 5 is a simplified block diagram of a network element; and
Figure 6 is a block diagram of an example mobile device.

### DETAILED DESCRIPTION OF THE DRAWINGS

The present disclosure provides a method of allocating uplink resources for hybrid automatic repeat request acknowledgement at a user equipment (UE), the method comprising: indicating a first set of uplink resources to the user equipment; and indicating a first subset of the first set of uplink resources that the UE may transmit upon using a position of a first downlink control channel (DCCH) scheduling a downlink shared channel (DSCH) on a cell.

The present disclosure further provides a network element for allocating uplink resources for hybrid automatic repeat request acknowledgement, the network element comprising: a processor; and a communications subsystem, wherein the processor and communications subsystem are configured to: indicate a first set of uplink resources to a user equipment (UE); and indicate a first subset of the first set of uplink resources that the UE may transmit upon using a position of a first downlink control channel (DCCH) scheduling a downlink shared channel (DSCH) on a cell.

The present disclosure further provides a method at a user equipment (UE) for receiving an allocation of uplink resources for hybrid automatic repeat request acknowledgement, the method comprising: receiving a first set of uplink resources from a network element; and deriving a first subset of the first set of uplink resources that the UE may transmit upon using a position of a first downlink control channel (DCCH) scheduling a downlink shared channel (DSCH) on a cell.

The present disclosure further provides a user equipment (UE) for receiving an allocation of uplink resources for hybrid automatic repeat request acknowledgement, the user equipment comprising: a processor; and a communications subsystem, wherein the processor and communications subsystem are configured to: receive a first set of uplink resources from a network element; and derive a first subset of the first set of uplink resources that the UE may transmit upon using a position of a first downlink control channel (DCCH) scheduling a downlink shared channel (DSCH) on a cell.

The present disclosure further provides a method of allocating uplink resources for hybrid automatic repeat request acknowledgement at a user equipment (UE), the method comprising: indicating a first set of uplink resources to the user equipment; indicating a first subset of the first set of uplink resources that the UE may transmit upon using downlink control information bits within a first downlink control channel that schedules a downlink shared channel (DSCH) on a primary cell, wherein the first downlink control channel is transmitted on the primary cell; and indicating a second subset of the first set of uplink resources that the UE may transmit upon by downlink control information bits within a second downlink control channel, wherein the uplink resources in the second subset may be the same as the uplink resources in the first subset of uplink resources.

The present disclosure further provides a network element for allocating uplink resources for hybrid automatic repeat request acknowledgement, the network element comprising: a processor; and a communications subsystem, wherein the processor and communications subsystem are configured to: indicate a first set of uplink resources to a user equipment (UE); indicate a first subset of the first set of uplink resources that the UE may transmit upon using downlink control information bits within a first downlink control channel that schedules a downlink shared channel (DSCH) on a primary cell, wherein the first downlink control channel is transmitted on the primary cell; and indicate a second subset of the first set of uplink resources that the UE may transmit upon by downlink control information bits within a second downlink control channel, wherein the uplink resources in the second subset may be the same as the uplink resources in the first subset of uplink resources.

The present disclosure further provides a method at a user equipment (UE) for receiving an allocation of uplink resources for hybrid automatic repeat request acknowledgement, the method comprising: receiving a first set of uplink resources to the user equipment; deriving a first subset of the first set of uplink resources that the UE may transmit upon using downlink control information bits within a first downlink control channel that schedules a downlink shared channel (DSCH) on a primary cell, wherein the first downlink control channel is received on the primary cell; and deriving a second subset of the first set of uplink resources that the UE may transmit upon by downlink control information bits within a second downlink control channel, wherein the uplink resources in the second subset may be the same as the uplink resources in the first subset of uplink resources.

The present disclosure further provides a user equipment (UE) for receiving an allocation of uplink resources for hybrid automatic repeat request acknowledgement, the user equipment comprising: a processor; and a communications subsystem, wherein the processor and communications subsystem are configured to: receive a first set of uplink resources to the user equipment; derive a first subset of the first set of uplink resources that the UE may transmit upon using downlink control information bits within a first downlink control channel that schedules a downlink shared channel (DSCH) on a primary cell, wherein the first downlink control channel is received on the primary cell; and derive a second subset of the first set of uplink resources that the UE may transmit upon by downlink control information bits within a second downlink control channel, wherein the uplink resources in the second subset may be the same as the uplink resources in the first subset of uplink resources.

Because the Long-Term Evolution (LTE) Standard Release 8 (hereinafter "Rel-8") frame structure 2 (time-division duplex [TDD]) may have many more downlink subframes than uplink subframes and because each of the downlink subframes carries up to two transport blocks, Rel-8 TDD supports transmission of up to 4 Ack/Nack (A/N) bits in a subframe. If more than 4 A/N bits are required, the spatial bundling in which two Ack/Nack bits of the same downlink subframe are bundled is supported. These 4 Ack/Nack bits can be transmitted using channel selection. More recently, LTE Release 10 (hereinafter "Rel-10") uses channel selection for up to 4 Ack/Nack bits to support carrier aggregation for both frame structures, i.e., frequency division duplex (FDD) and TDD. Therefore, the use of channel selection for Ack/Nack feedback is of growing interest.

Ack/Nack bits are carried in LTE, using physical uplink control channel (PUCCH) format "1a" and "1b" on PUCCH resources, as described below. Because no more than 2 bits can be carried in these PUCCH formats, 2 extra information bits are needed for carrying 4 Ack/Nack bits. These extra two bits can be conveyed through channel selection.

A user equipment (UE), sometimes hereinafter referred to as a "client node," encodes information using channel selection by selecting a PUCCH resource to transmit on. Channel selection uses 4 PUCCH resources to convey these two bits. This can be described using the data in **Table 1** below:

**Table 1:** PUCCH format 1b channel selection

| RRes | DRes | Codewords 0 to 15 | | | | | | | | | | | | | | | |
|---|---|---|---|---|---|---|---|---|---|---|---|---|---|---|---|---|---|
| | | 0000 | 0001 | 0010 | 0011 | 0100 | 0101 | 0110 | 0111 | 1000 | 1001 | 1010 | 1011 | 1100 | 1101 | 1110 | 1111 |
| 0 | 0 | 1 | j | -j | -1 | 0 | 0 | 0 | 0 | 0 | 0 | 0 | 0 | 0 | 0 | 0 | 0 |
| 1 | 1 | 0 | 0 | 0 | 0 | 1 | j | -j | -1 | 0 | 0 | 0 | 0 | 0 | 0 | 0 | 0 |
| 2 | 2 | 0 | 0 | 0 | 0 | 0 | 0 | 0 | 0 | 1 | j | -j | -1 | 0 | 0 | 0 | 0 |
| 3 | 3 | 0 | 0 | 0 | 0 | 0 | 0 | 0 | 0 | 0 | 0 | 0 | 0 | 1 | j | -j | -1 |

Each column of the table indicates a combination of Ack/Nack bits (or a "codeword") to be transmitted. Each row of the table represents a PUCCH resource. Each cell contains a QPSK symbol transmitted on the PUCCH resource to indicate the codeword. The "DRes" column indicates which PUCCH resource carries the QPSK symbol, and the "RRes" column indicates the PUCCH resource used to carry the reference symbol. It is noted that the data and reference symbol resources are the same for Rel-8 channel selection. Note that each column of the table contains only one non-zero entry, since channel selection requires that only one resource is transmitted upon at a time on one transmission path. Transmitting on one transmission path maintains the good peak to average power characteristics of the signals carried on the PUCCH. The term "transmission path" refers to an RF chain that contains at least one power amplifier and is connected to one antenna.

For example, when Ack/Nack bits '0110' are to be transmitted, the UE can transmit the QPSK data symbol '-j' using PUCCH resource '1.' The reference signal transmission can also be on PUCCH resource '1'.

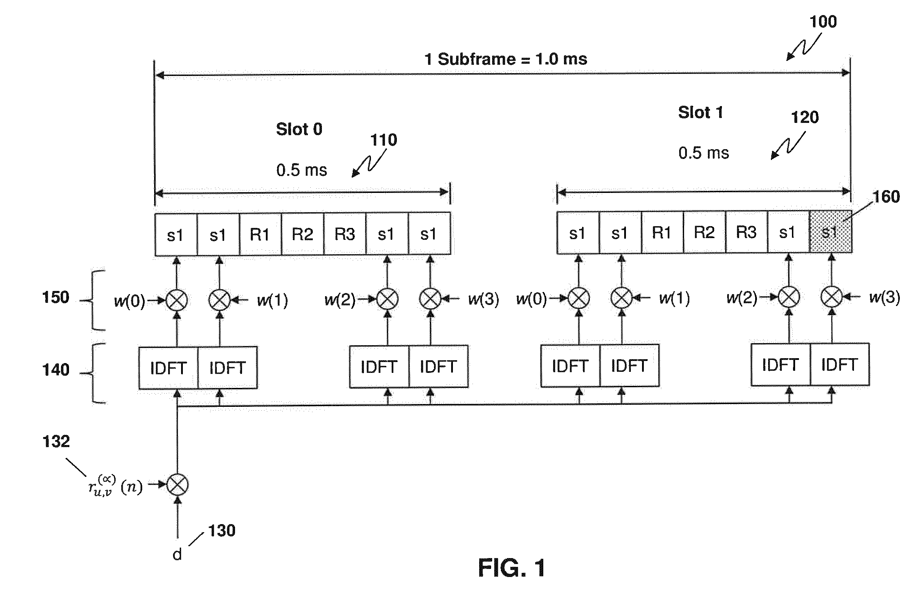

LTE carries Ack/Nack signaling on format 1a and 1b of the physical uplink control channel (PUCCH), as specified in Rel 10. An example of the subframe structure of PUCCH formats 1a and 1b with normal cyclic prefix is shown in **Figure 1.** Each format 1a/1b PUCCH can be in a subframe **100** made up of two slots, **110** and **120**. The same modulation symbol "d" **130** can be used in both slots. Without channel selection, formats 1a and 1b set carries one and two Ack/Nack bits, respectively. These bits are encoded into the modulation symbol "d," using BPSK or QPSK modulation, depending on whether one or two Ack/Nack bits are used.

Each data modulation symbol, d, is spread with a sequence, $r_{u,v}^{\alpha}(n)$ **132** such that it is by a 12 samples long, which is the number of subcarriers in an LTE resource block in most cases. (For example, those of skill in the art will understand that a Multimedia Broadcast multicast service Single Frequency Network (MBSFN) transmission can use 24 subcarriers in a resource block when the subcarriers are spaced 7.5 kHz apart.). Next, the spread samples are mapped to the 12 subcarriers the PUCCH is to occupy and then converted to the time domain with an IDFT, shown by block **140.** Since the PUCCH is rarely transmitted simultaneously with other physical channels in LTE, the subcarriers that do not correspond to PUCCH are set to zero. Four replicas of the spread signal are then each multiplied with one element of an orthogonal cover sequence $w_p(m)$, shown by block **150**, where $m \in \{0,1,2,3\}$ corresponds to each one of 4 data bearing OFDM symbols in the slot. There are 3 reference symbols (R1, R2, and R3) in each slot **110** and **120** that allow channel estimation for coherent demodulation of formats 1a/1b.

There can be 12 orthogonal spreading sequences (corresponding to $r_{u,v}^{\alpha}(i)$ with $\alpha \in \{0,1,...,11\}$ indicating the cyclic shift) and one of them is used to spread each data symbol. Furthermore, in Rel-8, there are 3 orthogonal cover sequences $w_p(m)$ with $p \in \{0,1,2\}$ and $m \in \{0,1,2,3\}$. Each spreading sequence is used with one of the orthogonal cover sequences to form an orthogonal resource. Therefore, up to 12*3=36 orthogonal resources are available per each resource block of the PUCCH. The total amount of resources that can carry Ack/Nack is then 36 times the number of resource blocks (RBs) allocated for format 1/1a/1b.

Each orthogonal resource can carry one Ack/Nack modulation symbol "d," and, therefore, up to 36 UEs may transmit an Ack/Nack symbol on the same OFDM resource elements without mutually interfering. Similarly, when distinct orthogonal resources are transmitted from multiple antennas by a UE, they will tend to not interfere with each other, or with different orthogonal resources transmitted from other UEs. When there is no channel selection, the orthogonal resource used by the UE is known by the eNB. As discussed below, in case of channel selection, a predetermined set of the information bits determines the orthogonal resource to be utilized. The eNB detects that set of the information bits by recognizing what orthogonal resource is carrying other information bits.

Orthogonal resources used for reference symbols are generated in a similar manner as data symbols. They are also generated using a cyclic shift and an orthogonal cover sequence applied to multiple reference signal uplink modulation symbols. Because there are a different number of reference and data modulation symbols in a slot, the orthogonal cover sequences are different length for data and for reference signals. Nevertheless, there are an equal number of orthogonal resources available for data and for reference signals. Therefore, a single index can be used to refer to the two orthogonal resources used by a UE for both the data and reference signals, and this has been used since Rel-8. This index is signaled in Rel-8 as a PUCCH resource index, and is indicated in the LTE specifications as the variable $n_{PUCCH}^{(1)}$. The aforementioned LTE specifications include: (1) 3GPP TS 36.213 V10.1.0, "3rd Generation Partnership Project; Technical Specification Group Radio Access Network; Evolved Universal Terrestrial Radio Access (E-UTRA); Physical Layer Procedures (Release 10)", March, 2011; (hereinafter "Reference '1') and (2) 3GPP TS 36.211 V10.1.0, "3rd Generation Partnership Project; Technical Specification Group Radio Access Network; Evolved Universal Terrestrial Radio Access (E-UTRA); Physical Channels and Modulation (Release 10)", March, 2011. (hereinafter "Reference '2'). This index indicates both the RB and the orthogonal resource used to carry data and reference signals, and the indexed resource is therefore referred to as a 'PUCCH resource' in 3GPP parlance.

One cyclic shift may be used to transmit all symbols in a slot (including both data and reference symbols) associated with an antenna. In this case, the value of $\alpha$ is constant over the slot. However, LTE Rel-8 also supports cyclic shift hopping, where $\alpha$ varies over the slot. Cyclic shift hopping transmissions are synchronized within a cell such that UEs following the cell-specific hopping pattern do not mutually interfere. If neighbor cells also use cyclic shift hopping, then for each symbol in a slot, different UEs in the neighbor cells will tend to interfere with a UE in a serving cell. This provides an "interference averaging" behavior that can mitigate the case where one or a small number of neighbor cell UEs strongly interfere with a UE in the serving cell. Because the same number of non-mutually interfering PUCCH resources are available in a cell regardless of whether cyclic shift hopping is used, PUCCH resource can be treated equivalently for the hopping and non-hopping cases. Therefore, hereinafter when reference is made to a PUCCH resource, it may be either hopped or non-hopped.

The PUCCH format 1a/1b structure shown in **Figure 1** varies, depending on a few special cases. One variant of the structure that is important to some Tx diversity designs for format 1a/1b is that the last symbol of slot 1, shown by reference numeral **160,** may be dropped (not transmitted), in order to not interfere with SRS transmissions from other UEs.

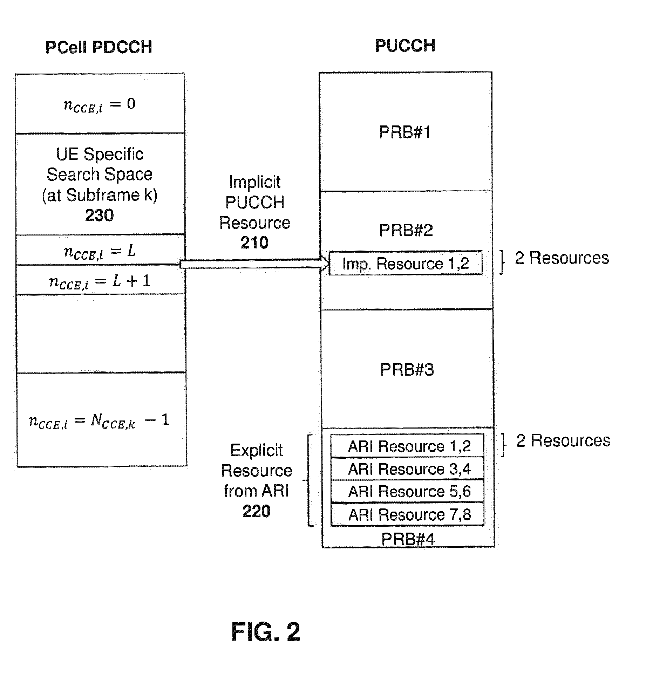

In LTE Rel-10, carrier aggregation up to 4 Ack/Nack bits may be indicated using channel selection. The PUCCH resource that a UE is to use may be signaled using a combination of implicit and explicit signaling. For example, as shown in **Figure 2,** one or more resources are signaled implicitly using the location of the scheduling grant for the UE on the Physical Downlink Control Channel (PDCCH) of its primary cell (PCell), as shown by reference numeral **210,** and one or more resources may be indicated using the Ack/Nack resource indicator (ARI) bits contained in the grant for the UE on the PDCCH of one of the UE's secondary cells (SCells), as shown by reference numeral **220.**

While not shown in **Figure 2,** those of skill in the art will understand that it is also possible for all PUCCH resources to be allocated with implicit signaling. This occurs when PDCCH of SCell is transmitted on PCell with cross carrier scheduling.

UEs may be scheduled on a set of control channel elements (CCEs) that are specific to that UE only. This is indicated in **Figure 2** as the UE Specific Search Space (UESS) **230.** The UE Specific Search Space **230** is normally different in each subframe.

LTE PUCCH resources can be implicitly signaled by the position of a physical downlink control channel scheduling a physical downlink shared channel on a cell. The position is the index of the first CCE occupied by the grant transmitted to the UE on the PCell PDCCH (labeled $n_{CCE,i} = L$ in **Figure** 2) is used for this purpose. Up to two PUCCH resources may be determined this way from one PDCCH in Rel-10. When two resources are implicitly signaled, the second PUCCH resource index is calculated using the next CCE after the first CCE of the PDCCH detected by the UE (i.e., $n_{CCE,i} = L + 1$, as shown in **Figure 2).** As discussed in section 10.1 of 3GPP TS 36.213 V10.1.0, "3rd Generation Partnership Project; Technical Specification Group Radio Access Network; Evolved Universal Terrestrial Radio Access (E-UTRA); Physical Layer Procedures (Release 10)", March, 2011, the first and second implicit PUCCH resource indices are mapped from the first CCE index using $n_{PUCCH,i}^{(1)} = n_{CCE,i} + N_{PUCCH}^{(1)}$ and $n_{PUCCH,i+1}^{(1)} = n_{CCE,i} + 1 + N_{PUCCH}^{(1)}$ ,

respectively, they are adjacent resources. Due to the way PUCCH resources are indexed in LTE, this means that they will typically share the same PUCCH physical resource block (PRB) unless one of the two resources is near the first or the last resource in a PRB.

Because the UE Specific Search Space varies subframe by subframe, the PUCCH resource mapped to by its CCEs also varies. Therefore, the implicit resource can be in multiple different RBs depending on the subframe.

In LTE Rel-10, two bits of the PDCCH on the SCell may be used as Ack/Nack Resource Indicator (ARI) bits. Also, up to two PUCCH resources may be indicated by PDCCH of the SCell. This means that 4 combinations of PUCCH resources are indicated by ARI, and each combination comprises one or two PUCCH resources.

In contrast to implicit signaling, explicit PUCCH resources are selected from a set of PUCCH resources that are signaled to the UE. The PUCCH resources a UE is to use are addressed by the ARI, and the set of PUCCH resources is semi-statically allocated to each UE. Therefore, explicit PUCCH resources do not move between PUCCH RBs unless the UE is reconfigured using higher layer signaling. Since an implicitly signaled PUCCH resource occupies different RBs on a subframe-by-subframe basis, but an explicitly signaled PUCCH resource occupies the same RB until the UE is reconfigured, the explicit and implicit PUCCH resources will commonly not be in the same PUCCH RB.

The pairs of explicit resources corresponding to each Ack/Nack Resource Indicator (ARI) state are independently signaled such that they can be positioned anywhere in the PUCCH resource. This can be implemented using the RRC signaling of *PUCCH-Config* information elements as disclosed in section 6.3.2 of 3GPP TS 36.331 V10.1.0, "3rd Generation Partnership Project; Technical Specification Group Radio Access Network; Evolved Universal Terrestrial Radio Access (E-UTRA); Radio Resource Control (RRC); Protocol specification (Release 10)," March, 2011. This means that the PUCCH resources can be, but are not necessarily, configured to be in the same PRB.

LTE Time Division Duplex (TDD) supports asymmetric operation, wherein the number of subframes allocated to downlink and to uplink transmissions are different. In such a case, Hybrid Automatic Repeat Request (HARQ)-ACK information transmitted from the UE in one subframe can correspond to multiple downlink subframes. The number of downlink subframes on a serving cell for which the UE provides HARQ-ACK information is generally referred to with the variable M. Because the number of downlink subframes requiring HARQ-ACK in a given uplink subframe can vary with time, the variable M is a function of the subframe index.

Because the UE may not receive a PDCCH transmission, a two bit Downlink Assignment Index (DAI) is included in the Downlink Control Information (DCI) carried within TDD PDCCHs. The DAI is encoded, for example, as shown in **Table 2** below, which refers to Section 7.3 of the 3GPP TS 36.213 V10.1.0, "3rd Generation Partnership Project; Technical Specification Group Radio Access Network; Evolved Universal Terrestrial Radio Access (E-UTRA); Physical Layer Procedures (Release 10)", March 2011, the contents of which are incorporated herein by reference.

As used herein, DAI=1 refers to the first row of **Table 2**, containing DAI state (0,0). DAI=2 refers to the second row of **Table 2,** containing DAI state (0,1). Similarly, DAI=3 and DAI=4, refer to the third and fourth rows **of Table 2,** respectively.

**Table 2:** Value of Downlink Assignment Index

| DAI MSB, LSB | $V_{DAI}^{UL}$ or $V_{DAI}^{DL}$ | Number of subframes with PDSCH transmission and with PDCCH indicating DL SPS release |
|---|---|---|
| 0,0 | 1 | 1 or 5 or 9 |
| 0,1 | 2 | 2 or 6 |
| 1,0 | 3 | 3 or 7 |
| 1,1 | 4 | 0 or 4 or 8 |

The ability to have HARQ-ACK information in one uplink subframe correspond to multiple downlink subframes leads to somewhat different PUCCH resource allocation mechanisms from Frequency Division Duplex (FDD). When M > 1 and implicit resource allocation is used, multiple PDCCHs transmitted in different downlink subframes are used to determine PUCCH resources that are used in one subframe. This is described, for example, in Section 10.1.3 of the 3GPP TS 36.213 specification.

A variety of open loop uplink transmit diversity schemes for channel selections have been proposed, including a Resource Selection Transmit Diversity (RSTD) transmission diversity scheme that uses a small number of PUCCH resources. Such schemes use less than double the PUCCH resources of a single antenna transmission, and are called 'resource efficient' transmission diversity. Because Release 10 resource allocation may be difficult to apply in some cases for resource efficient transmit diversity schemes, it may be advantageously used with embodiments herein, and is described below.

RSTD uses an additional spatial dimension in a multi-antenna transmission scenario to communicate the Ack/ Nack information and hence improve the performance as compared to single antenna channel selection. In RSTD, for each combination of Ack/Nack bits a pair of orthogonal resources is selected for transmission on two antennas. Different codewords (combinations of Ack/Nack bits) are distinguished by different pairs of orthogonal resources and/or different modulation symbols. With this structure, RSTD can exploit transmit diversity with the same or a slightly larger number of orthogonal resources available for single antenna channel selection.

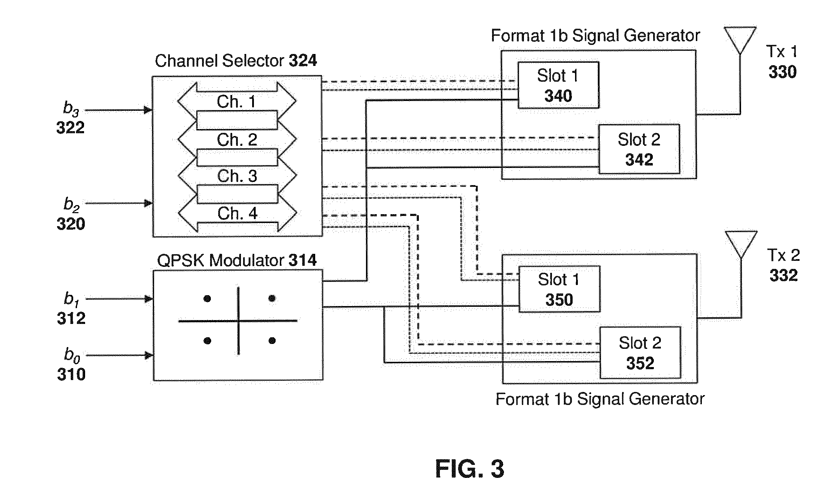

In particular, reference is made to **Figure 3,** which shows an exemplary RSTD transmission.

In particular, two bits, **310** and **312,** are provided to a QPSK modulator **314.** Further, two bits, **320** and **322,** are provided to a channel selector **324.**

QPSK modulator **314** provides modulation symbols to antennas **330** and **332.** In particular, modulations are provided to slots **340** and **342** of antenna **330** and to slots **350** and **352** of antenna **332.**

Similarly, channel selector **324** provides both data resources and reference symbol resources to each of the slots **340, 342, 350** and **352.**

Thus, considering a general framework, it may be assumed that the resources used for different reference symbols may vary from those used for data. Hence, for each combination of Ack/Nack bits, a pair of resources for data and a pair of resources for RS transmission may be selected. Also, the modulation symbols the second antenna carries can be different between the two slots and each of these symbols may be different from the symbol carried on the first antenna in the same slot.

Referring now to **Table 3** below, the table shows an RSTD code for the case of four Ack/Nack bits. In particular, in **Table 3** the rows represent combinations of Ack/Nack bits and the columns represent PUCCH resources used for data or reference symbols. 'DTX' indicates a PDCCH was not received by the UE, 'NACK/DTX' indicates that the UE either did not successfully decode a PDSCH transport block or that it did not receive the PDCCH granting the PDSCH transport block, and 'ACK' indicates that the UE both received the PDCCH grant and successfully decoded the transport block. The data symbols transmitted for each combination of Ack/Nack bits are indicated in the cell at the intersection of corresponding rows and columns of **Table 3.** The antenna ports are listed in two sets of columns. Since it is assumed that transmitted data symbols may be different across the slots, each antenna is labeled with two symbols for each Ack/Nack bit combination, as shown in **Table 3.**

**Table 3:** 4 Bit RSTD

| HARQ-ACK(0) | HARQ-ACK(1) | HARQ-ACK(2) | HARQ-ACK(3) | Antenna Port 0 | | | | Antenna Port 1 | | | |
|---|---|---|---|---|---|---|---|---|---|---|---|
| | | | | Ch#0 | Ch#1 | Ch#2 | Ch#3 | Ch#0 | Ch#1 | Ch#2 | Ch#3 |
| NACK/DTX | NACK | NACK/DTX | NACK/DTX | 1,1,r | | | | | -j,-j,r | | |
| NACK | NACK/DTX | NACK/DTX | NACK/DTX | 1,1,r | | | | | -j,-j,r | | |
| ACK | NACK/DTX | NACK/DTX | NACK/DTX | j,j,r | | | | | j,1,r | | |
| NACK/DTX | ACK | NACK/DTX | NACK/DTX | -j,-j,r | | | | | 1,j,r | | |
| ACK | ACK | NACK/DTX | NACK/DTX | -1,-1,r | | | | | -1,-1,r | | |
| NACK/DTX | ACK | ACK | NACK/DTX | r | 1,1 | | | | | r | -j,-j |
| ACK | ACK | ACK | NACK/DTX | r | j-j | | | | | r | j,1 |
| NACK/DTX | ACK | ACK | ACK | r | -j,-j | | | | | r | 1,j |
| ACK | ACK | ACK | ACK | r | -1,-1 | | | | | r | -1,-1 |
| NACK/DTX | NACK/DTX | NACK/DTX | ACK | | | 1,1,r | | | | -j,-j,r | |
| NACK/DTX | NACK/DTX | ACK | NACK/DTX | | | j,j,r | | | | j,1,r | |
| NACK/DTX | ACK | NACK/DTX | ACK | | | -j,-j,r | | | | 1,j,r | |
| NACK/DTX | NACK/DTX | ACK | ACK | | | -1,-1,r | | | | -1,-1,r | |
| ACK | NACK/DTX | ACK | NACK/DTX | | 1,1 | r | -j,-j | r | | | |
| ACK | NACK/DTX | NACK/DTX | ACK | | j-j | r | j,1 | r | | | |
| ACK | NACK/DTX | ACK | ACK | | -j,-j | r | 1,j | r | | | |
| ACK | ACK | NACK/DTX | ACK | | -1,-1 | r | -1,-1 | r | | | |
| DTX | DTX | NACK/DTX | NACK/DTX | No Transmission | | | | | | | |

The PUCCH resource used for the reference signal of an Ack/Nack bit combination is indicated with a "r" in the cell at the intersection of the column corresponding to the resource and the row corresponding to Ack/Nack bits. In the example of **Table 3,** it is assumed that the modulation symbol used for the reference signals does not vary between slots and thus only one "r" is needed per antenna on a row.

Further, as seen from **Table 3,** two different PUCCH resources are needed for a transmission. Specifically, one resource is need for antenna port 0 and one resource is needed for antenna port 1. Further, a total of four PUCCH resources are used to transmit four Ack/Nack bits, which is the same number that is required for four Ack/Nack bits for a single antenna transmission as described above.

One issue for many open loop channel selection transmission diversity schemes is that a distinct PUCCH resource is transmitted on each antenna. Therefore, at least two resources must be indicated from a cell from each open loop transmission diversity UE. This is straightforward for channel selection using LTE Rel-10 TDD resource allocation when Ack/Nack bits correspond to one PDSCH subframe, for example when spatial multiplexing is used with $M$=1, or ARI based resource allocation is used, since in these modes two PUCCH resources are indicated with one PDCCH. In the case of spatial multiplexing with $M$=1, $n_{cce}$+1 is used to indicate the second resource, and when ARI is used to indicate PUCCH resources, both resources can be directly indicated. Therefore, in these modes no extra PUCCH overhead is needed.

However, when two PDCCHs are used to indicate two PUCCH resources from one cell when $M$>1, the issue is not as straightforward since Rel-10 TDD implicit resource allocation indicates one PUCCH resource independently per PDCCH. If two PDCCHs are used and only one of them may be scheduled at a time, then a resource pair has to be determined from one of the PDCCHs. In general, two options exist. A first is to determine the two resources from only one PDCCH and a second is to determine the two resources from both PDCCHs.

If both PDCCHs are used, since each indicates two PUCCH resources, a total of 4 resources could be allocated, which is double what is needed from one cell. Since this does not support resource efficient transmission diversity schemes, it is undesirable.

If one PDCCH is used, existing TDD Ack/Nack mapping approaches may need modification in order to support the case where the PDCCH used for PUCCH resource allocation is discontinuous transmission (DTX) or Nack/DTX for open loop transmission diversity.

For example, reference is now made to **Table 4** below. **Table 4** illustrates an example of a single antenna transmission case in Rel-10 TDD with $M$=2, where 4 Ack/Nack bits are used. The HARQ states and the corresponding PUCCH resource allocations are shown in the **Table ,** where HARQ-ACK(i) corresponds to one of 4 PDSCHs.

Unlike Release 10, two of the four PDCCHs are used to determine PUCCH resources. Assuming that PUCCH resources $n_{\mathrm{PUCCH},0}^{(1)}$ and $n_{\mathrm{PUCCH},1}^{(1)}$ are indicated by a first PDCCH that schedules the PDSCH corresponding to HARQ-ACK(0) and that PUCCH resources $n_{\mathrm{PUCCH},2}^{(1)}$ and $n_{\mathrm{PUCCH},3}^{(1)}$ are indicated by a third PDCCH that schedules the PDSCH corresponding to HARQ-ACK(2). In **Table 4,** the cases where HARQ-ACK(0) and HARQ-ACK(2) can be DTX are highlighted, and so the resource pair $n_{\mathrm{PUCCH},0}^{(1)}$ and $n_{\mathrm{PUCCH},1}^{(1)}$ or $n_{\mathrm{PUCCH},2}^{(1)}$ and $n_{\mathrm{PUCCH},3}^{(1)}$ would not be available. Cases where HARQ-ACK(0) can be DTX and resource pair $n_{\mathrm{PUCCH},0}^{(1)}$ and $n_{\mathrm{PUCCH},1}^{(1)}$ can be unavailable to the UE are shown in bold, and the corresponding cases where HARQ-ACK(2) can be DTX and resource pair $n_{\mathrm{PUCCH},2}^{(1)}$ and $n_{\mathrm{PUCCH},3}^{(1)}$ are not available are bold and italics. Furthermore, resources $n_{\mathrm{PUCCH},0}^{(1)}$ and $n_{\mathrm{PUCCH},1}^{(1)}$ are bold for rows where there is a potential for unavailable resource, and resources $n_{\mathrm{PUCCH},2}^{(1)}$ and $n_{\mathrm{PUCCH},3}^{(1)}$ are bold and italics in these cases. A (*) is placed in a cell where resources the UE needs to transmit on can be unavailable if a PDCCH is DTX.

**Table 4:** Transmission of HARQ-ACK multiplexing for $A = 4$

| HARQ-ACK(0), HARQ-ACK(1), HARQ-ACK(2), HARQ-ACK(3) | $n_{\mathrm{PUCCH}}^{(1)}$ | $b(0)b(1)$ |
|---|---|---|
| ACK, ACK, ACK, ACK | $n_{\mathrm{PUCCH},1}^{(1)}$ | 1, 1 |
| ACK, ACK, ACK, NACK/DTX | $n_{\mathrm{PUCCH},2}^{(1)}$ | 1, 1 |
| ACK, ACK, *NACK/DTX,* ACK | $\mathbf{n_{\mathbf{PUCCH,0}}^{(1)}}$ | 1, 0 |
| ACK, ACK, ***NACK/DTX,*** NACK/DTX | $\mathbf{n_{\mathbf{PUCCH,1}}^{(1)}}$ | 1, 0 |
| ACK, NACK/DTX, ACK, ACK | $n_{\mathrm{PUCCH},3}^{(1)}$ | 1, 1 |

(continued)

| HARQ-ACK(0), HARQ-ACK(1), HARQ-ACK(2), HARQ-ACK(3) | $n_{\mathrm{PUCCH}}^{(1)}$ | $b(0)b(1)$ |
|---|---|---|
| ACK, NACK/DTX, ACK, NACK/DTX | $n_{\mathrm{PUCCH},2}^{(1)}$ | 1, 0 |
| ACK, NACK/DTX, *NACK/DTX,* ACK | $n_{\mathrm{PUCCH},0}^{(1)}$ | 0, 1 |
| ACK, NACK/DTX, *NACK/DTX,* NACK/DTX | $n_{\mathrm{PUCCH},0}^{(1)}$ | 1, 1 |
| **NACK/DTX,** ACK, ACK, ACK | $n_{\mathrm{PUCCH},1}^{(1)}$* | 0, 0 |
| **NACK/DTX,** ACK, ACK, NACK/DTX | $n_{PUCCH,2}^{(1)}$ | 0, 1 |
| **NACK/DTX,** ACK, ***NACK/DTX,*** ACK | $n_{PUCCH,3}^{(1)}$* | 1, 0 |
| **NACK/DTX,** ACK, *NACK/DTX,* NACK/DTX | $n_{\mathrm{PUCCH},1}^{(1)}$* | 0, 1 |
| **NACK/DTX,** NACK/DTX, ACK, ACK | $n_{PUCCH,3}^{(1)}$ | 0, 1 |
| **NACK/DTX,** NACK/DTX, ACK, NACK/DTX | $n_{PUCCH,2}^{(1)}$ | 0, 0 |
| **NACK/DTX,** NACK/DTX, *NACK/DTX,* ACK | $n_{PUCCH,3}^{(1)}$* | 0, 0 |
| NACK, NACK/DTX, *NACK/DTX,* NACK/DTX | $n_{\mathrm{PUCCH},0}^{(1)}$ | 0, 0 |
| DTX, NACK/DTX, NACK/DTX, NACK/DTX | No Transmission | |

As seen in **Table 4,** there are 4 cases where a missed PDCCH will cause a needed resource to be unavailable to the UE. One solution is to modify the supported HARQ-ACK combinations to have the UE not transmit for these cases. However, this may be undesirable as it reduces information available to the eNB scheduler. Thus, the use of two PDCCHs with Release 10 implicit resource allocation mechanisms for TDD with *M*>1 may be problematic. In one embodiment, resource allocation may function when PDCCHs can be DTX, but that do not require extra PUCCH resources to be used or to modify the HARQ-ACK states supported in Release 10.

In accordance with the present disclosure, two solutions are provided. A first is a hybrid implicit-explicit resource indication solution. A second is an explicit resource indication on a primary cell solution. Each is discussed below.

<u>HYBRID IMPLICIT-EXPLICIT RESOURCE INDICATION</u>

In accordance with the Hybrid Implicit-Explicit Resource Indication solution, four main components are provided. These are that (1) the modified implicit resource allocation exists for a first PDCCH; (2) explicit resource allocation is used for the remaining PDCCHs; (3) duplicate resource indications are avoided; and (4) resource allocation is disambiguated.

In particular, a modified implicit resource allocation for a first PDCCH is provided. Implicit resource allocation is modified for the first PDCCH that schedules PDSCH on a serving cell, c. In one embodiment, the PDCCH does not need to be transmitted on serving cell c. The PDCCH can be identified as one with a DAI = 1 for serving cell c. Alternatively, the PDCCH may be identified as the PDCCH with the smallest starting CCE index $n_{\mathrm{cce},m}$. The position of the PDCCH is used to indicate one of the $N_{\mathrm{ari}}$ PDCCH resources that are signaled to the UE. This may be done in accordance with equation 1.

$$\left[n_{\mathrm{PUCCH},2i,1}^{(1)}, n_{\mathrm{PUCCH},2i+1,1}^{(1)}\right] = ARI\left(\mathrm{mod}\left(\left\lfloor n_{\mathrm{CCE},m} / L_{CCE} \right\rfloor, N_{ARI}\right)\right) \tag{1}$$

Where:

$\left[n_{\mathrm{PUCCH},2i,1}^{(1)}, n_{\mathrm{PUCCH},2i+1,1}^{(1)}\right]$ is a set of two PUCCH resources determined using the lookup function $ARI()$. Note that while this embodiment uses two PUCCH resources per set, it may be desirable in other cases to have a different number of PUCCH resources per set;

$L_{CCE}$ is the length of the PDCCH in CCEs;

$n_{\mathrm{cce,m}}$ is the index of the first CCE for the $m^{\mathrm{th}}$ PDCCH;

$N_{\mathrm{ARI}}$ is the number of sets of explicit PUCCH resources that can be dynamically signalled to the UE. In order to be consistent with Rel-10 ARI, this value is typically 4; and

$\mathrm{mod}(x,y)$ is the remainder when the integer x is divided by the integer y.

The lookup function $ARI(x)$ selects a subset of PUCCH resources from a pre-allocated set of PUCCH resources in the same way as the Release 10 LTE. The function comprises a table where each row contains a set of PUCCH resources, where the set of PUCCH resources on the row is selected for a value of the integer x. The set of PUCCH resources are semistatically signalled to the UE.

In one embodiment, if explicit resource allocation is used for the PDCCH, the implicit resource allocation is not used and instead the solution for the **"Error! Reference source not found."** described below is used.

Explicit resource allocation for the remaining PDCCHs is then used on the remaining PDCCHs that schedule PDSCH on the serving cell *c*. This is done in the same way as the Release 10 ARI. The bits on the downlink control information on the PDCCH that are normally used for power control bits for PUCCH are instead used as ARI bits. The above may be expressed in accordance equation 2 below.

$$\left[n_{\mathrm{PUCCH},2i,j}^{(1)}, n_{\mathrm{PUCCH},2i+1,j}^{(1)}\right] = ARI\left(pc\_bits\_state\right) \tag{2}$$

Where:

$\left[n_{\mathrm{PUCCH},2i,j}^{(1)}, n_{\mathrm{PUCCH},2i+1,j}^{(1)}\right]$ are two PUCCH resources determined using the lookup function $ARI()$ from the $j^{\mathrm{th}}$ PDCCH scheduling a PDSCH on cell c. Note that $j$>1; and

$pc\_bits\_state$ indicates one of the $2^{N_{pc\_bits}}$ states possible with $N_{pc\_bits}$ power control bits used for PUCCH.

Thus, in this embodiment, explicit resource allocation utilizes power control bits for PUCCH to provide an Ack/Nack resource indicator. Alternative embodiments may use other bits in the downlink control information carried by PDCCH, provided that which bits are used for this purpose is known to both the UE and the eNB.

With regard to duplicate resource indications, since the PDCCHs indicate multiple PUCCH resources, it is possible to over allocate resources. To avoid this, the resources indicated by the modified implicit resource allocation and the explicit resource allocation for the remaining PDCCHs that schedule PDSCH on the cell may be the same. In other words, , if $pc\_bits\_state = \mathrm{mod}(n_{CCE,m}, N_{ARI})$ , then $\left[n_{\mathrm{PUCCH},2i,j}^{(1)}, n_{\mathrm{PUCCH},2i+1,j}^{(1)}\right] = \left[n_{\mathrm{PUCCH},2i,1}^{(1)}, n_{\mathrm{PUCCH},2i+1,1}^{(1)}\right]$ .

Therefore, the same lookup function $ARI()$ with the same semi-statically signalled PUCCH resources is used for equation 1 for cell c and for explicit resource allocation for the remaining PDCCHs that schedule PDSCH on cell c.

With regard to resource allocation disambiguation, since there are multiple resource indications from the modified implicit resource allocation and from one or more explicit resource allocations, the UE needs to determine which it should use. That is, the UE needs to determine a single allocation $\left[n_{\mathrm{PUCCH},2i}^{(1)}, n_{\mathrm{PUCCH},2i+1}^{(1)}\right]$ from $\left[n_{\mathrm{PUCCH},2i,1}^{(1)}, n_{\mathrm{PUCCH},2i+1,1}^{(1)}\right]$ and one or more of $\left[n_{\mathrm{PUCCH},2i,j}^{(1)}, n_{\mathrm{PUCCH},2i+1,j}^{(1)}\right]$, where $\left[n_{\mathrm{PUCCH},2i}^{(1)}, n_{\mathrm{PUCCH},2i+1}^{(1)}\right]$ the resources to be used for transmission.

Two possibilities for resource allocation disambiguation exist. A first is that a modified implicit resource allocation and explicit resource allocation cannot be assumed to be identical. That is: $\left[n_{\mathrm{PUCCH},2i,j}^{(1)}, n_{\mathrm{PUCCH},2i+1,j}^{(1)}\right] = \left[n_{\mathrm{PUCCH},2i,1}^{(1)}, n_{\mathrm{PUCCH},2i+1,1}^{(1)}\right]$ is not always true. If the modified implicit allocation and all explicit resource allocations are not constrained to be identical, the UE must determine which it should use. One approach would be where the PDCCH with the lowest CCE index of a set of PDCCHs corresponding to PDSCHs on the same cell is used to determine PUCCH resources. Alternatively, a PDCCH with a particular DAI value, for example, 1, of a set of PDCCHs corresponding to PDSCHs on the same cell is used to determine PUCCH resources.

In a second possibility for resource allocation disambiguation, the modified implicit resource allocation and all explicit resource allocations may be assumed to be identical. That is:

$$\left[n^{(1)}_{\mathrm{PUCCH},2i,j}, n^{(1)}_{\mathrm{PUCCH},2i+1,j}\right] = \left[n^{(1)}_{\mathrm{PUCCH},2i,1}, n^{(1)}_{\mathrm{PUCCH},2i+1,1}\right]$$ should always be true. In this case, the UE may be left to

implement which $\left[n'^{(1)}_{\mathrm{PUCCH},2i}, n'^{(1)}_{\mathrm{PUCCH},2i+1}\right]$ or $\left[n''^{(1)}_{\mathrm{PUCCH},2i}, n''^{(1)}_{\mathrm{PUCCH},2i+1}\right]$ it selects as the resources for transmission. In one embodiment, it may be specified that the selection of the UE implementation choice and/or that the UE may assume that each PDCCH of a serving cell c indicates the same PUCCH resource as the other PDCCHs of the serving cell c. Alternatively, the same rules such as the first detected resource or the particular DAI value can be used as in the case where the resources cannot be assumed to be identical.

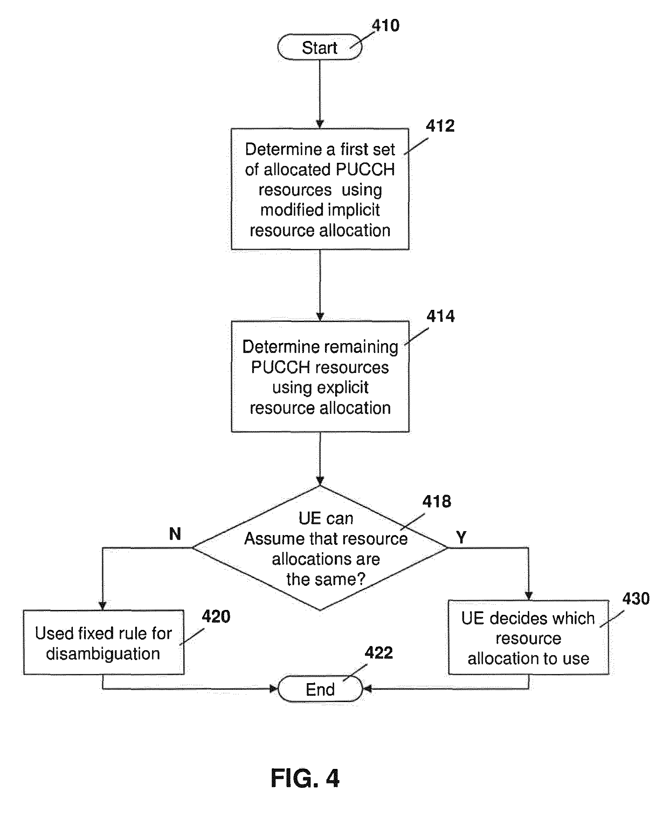

Based on the above, reference is now made to **Figure 4,** which describes a method in a UE for determining the PUCCH resources allocated to it. The process of **Figure 4** starts at block **410** and proceeds to block **412** in which the index of the first CCE of a PDCCH scheduling PDSCH on a serving cell, c, is used by the UE to determine a first set of PUCCH resources allocated to it. This is in accordance with the modified implicit allocation as described above.

From block **412** the process proceeds to block **414** in which the UE determines the remaining PUCCH resources from the remaining PDCCHs scheduling PDSCHs on the serving cell, c, in accordance with explicit resource allocation as described above. In one embodiment, power control bits are used for the ARI allocation.

From block **414** the process proceeds to block **418,** in which a check is made to determine whether the UE can assume that all modified implicit resource allocations and explicit resource allocations are identical. If no, the process proceeds to block **420** and a fixed rule is used for disambiguation. The process then proceeds to block **422** and ends.

Conversely from block **418** if the implicit and explicit resource allocations are identical, the process proceeds to block **430** in which a UE can decide which allocation to use. The process then proceeds to block **422** and ends.

As will be appreciated by those skilled in the art, the check at block **418** may not exist at a UE, but rather the selection of block **420** or **430** may be predefined at the time the device is manufactured or based on a standard implementation for UEs.

**EXPLICIT RESOURCE INDICATION ON A PRIMARY CELL**

A second embodiment is the same as the first embodiment, with the exception that a resource is no longer derived from the CCE index of the PDCCH. In this regard, the first component of the first embodiment, namely the modified implicit resource allocation for the first PDCCH, is replaced with an explicit resource allocation. Thus, in cases where implicit resource allocation would be used for the first PDCCH that schedules PDSCHs on a cell, implicit resource allocation is replaced with explicit resource allocation. The bits in the downlink control information on the PDCCH that are normally used for power control bits for the PUCCH are instead used as ARI bits, and resource allocation is computed in the same way as in the first embodiment, second component, namely the explicit resource allocation for remaining PDCCH$_\mathrm{S}$. Thus, the second embodiment would proceed directly from block **410** to block **414** in **Figure 4.**

In one embodiment, the first PDCCH that schedules the PDSCH on cell c can be identified as the one used with DAI=1.

Since the power control bits are used for PUCCH resource allocation instead of power control, other mechanisms may be needed if PUCCH power control is desired. Power control for PUCCH can be derived using one of the following approaches:

*CRC masked TPC*

The Release 8 mechanism that is used to indicate which of the UE's antennas to transmit on can be reused to indicate a power control bit. The same CRC masking techniques and antenna selection masks are used to indicate a single power control bit.

Since unlike Release 8, in this embodiment one power control bit is signalled per PDCCH, and since it is possible for a UE configured for carrier aggregation to receive only one PDCCH in a subframe, only one power control bit may be available for PUCCH in a subframe. Therefore, the 2 bit PUCCH power control method for DCI formats containing 2 power control bits may be replaced by a method that supports one power control bit per subframe.

The one bit power control may be provided using a similar mechanism to that used for Release 8 PUCCH power control through DCI format 3A. In this case, the power control bit provided may use the same mapping as the LTE Release 8, as shown below with regard to **Table 5**.

**Table 5:** Mapping of TPC Command derived from masked CRC to accumulated $\delta_{PUSCH,\,c}$ values

| TPC Command Field from Masked CRC | Accumulated $\delta_{PUSCH,\,c}$ [dB] |
|---|---|
| 0 | -1 |
| 1 | 1 |

**Table 5** has the same values as Table 5.1.1.1-3 of the 3GPP TS 36.213 Technical Standard. Further, the remainder of the power control mechanism follows the power control mechanism specified for Release 8, defined in Section 5.1.2.1 of the 3G PP TS 36.213 Technical Standard.

The CRC masking operation operates as follows. In one embodiment, antenna selection masks are the same as in Table 5.3.3.2-1 of the 3G PP TS 36.212 Technical Standard.

In the case where the TPC command CRC masking is configured and applicable, after attachment, the CRC parity bits of PDCCH with DCI format 0 are scrambled with the TPC command mask $x_{AS,0}$, $x_{AS,1}$,..., $x_{AS,15}$ as indicated in **Table 6** and the corresponding RNTI $x_{rnti,0}$, $x_{rnti,1}$,..., $x_{rnti,15}$ to form the sequence of bits $c_0$, $c_1$, $c_2$, $c_3$, ..., $c_{B-1}$, The relation between $c_k$ and $b_k$ is:

$$c_k = b_k$$

for k = 0, 1, 2, ..., A-1

$$c_k = \left(b_k + x_{rnti,k-A} + x_{AS,k-A}\right)\bmod 2$$

for k = A, A+1, A+2,..., A+15.

**Table 6:** TPC command mask

| TPC command | TPC command mask $<x_{AS,0},x_{AS,1},..., x_{AS,15}>$ |
|---|---|
| 0 | <0, 0, 0, 0, 0, 0, 0, 0, 0, 0, 0, 0, 0, 0, 0, 0> |
| 1 | <0, 0, 0, 0, 0, 0, 0, 0, 0, 0, 0, 0, 0, 0, 0, 1> |

In cases where information bits, such as DAI, are carried on the PDCCH are used to determine the first PDCCH that schedules the PDSCH on a cell, it may be difficult for a UE to determine which PDCCH is the first until it decodes the PDCCH. In this case, the UE will not be able to reliably determine if a second PDCCH that schedules the PDSCH on a cell has a CRC that is not masked with a TPC command. If the power control command is a "1" or if a bit of the CRC is received in error, the CRC check will not pass. Therefore, the UE cannot reliably determine if the PDCCH was received with reliability, but with a power control command of "1", or if the PDCCH was received with a bit error.

Because it is difficult for a UE to determine if a second PDCCH contains a CRC masked TPC, it may be desirable for all PDCCHs that schedule PDSCH on a cell to carry CRC masked TPC when at least one of them carries the CRC masked TPC. In this case, a UE will receive multiple power control bits from the PDCCHs. Since it is desirable to have a single power control command per subframe, in this solution the UE may derive a single power control command when it receives multiple PDCCHs carrying TPC commands for PUCCH that are to be applied in a subframe.

In one embodiment, the TPC commands cannot be assumed to be identical. In this case, the UE may use the same function or algorithm to determine a single power control command to use. The UE may use the TPC command from the PDCCH that is transmitted in the subframe that is closest to subframe when the PUCCH will be transmitted. If there are multiple TPC commands transmitted in the same subframe, the UE may use an additional mechanism to differentiate them. In this case, one solution may be to select the TPC command from a PDCCH with a particular DAI value, for example 1. Another solution would be to select the TPC command from a PDCCH with the smallest CCE index. A benefit of this set of solutions would be that the power control commands could be more up to date, since the most recent power control commands can be used for PUCCH.

In a second embodiment, the TPC commands can be assumed to be identical. In this case, one solution would be to specify that the UE can assume the TPC commands are the same. Therefore, in this solution it is left to the UE implementation which TPC command to use, since the result should be the same.

Another solution is to allow the UE to assume that the TPC commands are different but that it is left up to the UE implementation to decide which of the TPC commands the UE is to use when the TPC commands are different. This solution is more or less equivalent to the first solution above since the eNB would normally set the TPC commands to be the same if it wants reliable power control. One benefit of the second embodiment is that the handling of TPC commands could be simple, since it is up to UE implementation to decide which of the multiple TPC commands the UE is to use.

*Format 3/3A Group Power Control*

When it is desirable to transmit power control commands for PUCCH of multiple UEs in a single PDCCH, the TPC for PUCCH of UEs whose TPC commands are replaced by ARI can also be provided by DCI formats 3 and 3A. In Release 10 and prior releases, the UE is not required to simultaneously receive PDCCHs containing Format 3 or 3A power control commands for PUCCH and PDCCHs dedicated to one UE that contains PUCCH power control commands. In other words, these are PDCCHs with DCI formats 1A, 1 B, 1D, 1, 2A, 2B, 2C, and 2. Therefore, format 3/3A power control may not be used for a UE while it continuously receives grants for PDSCH. A solution to this is to increase the amount of PDCCH decoding a UE must do by requiring that the UE decode the PDCCH masked by a TPC-PUCCH-RNTI in addition to the PDCCHs masked with other RNTIs, including C-RNTI. Since the PUCCH TPC is only obtained from PDCCHs transmitted on a PCell in Release 10, this may be sufficient to additionally monitor the TPC-PUCCH-CRNTI on PUCCHs transmitted from PCell only.

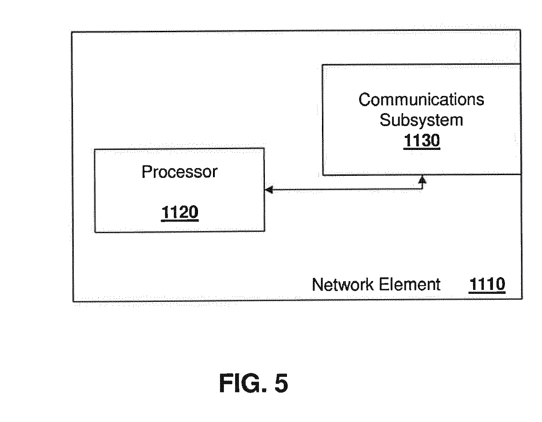

The above may be implemented by any network element. A simplified network element is shown with regard to **Figure 5.**

In **Figure 5,** network element **510** includes a processor **520** and a communications subsystem **530,** where the processor **520** and communications subsystem **530** cooperate to perform the methods described above.

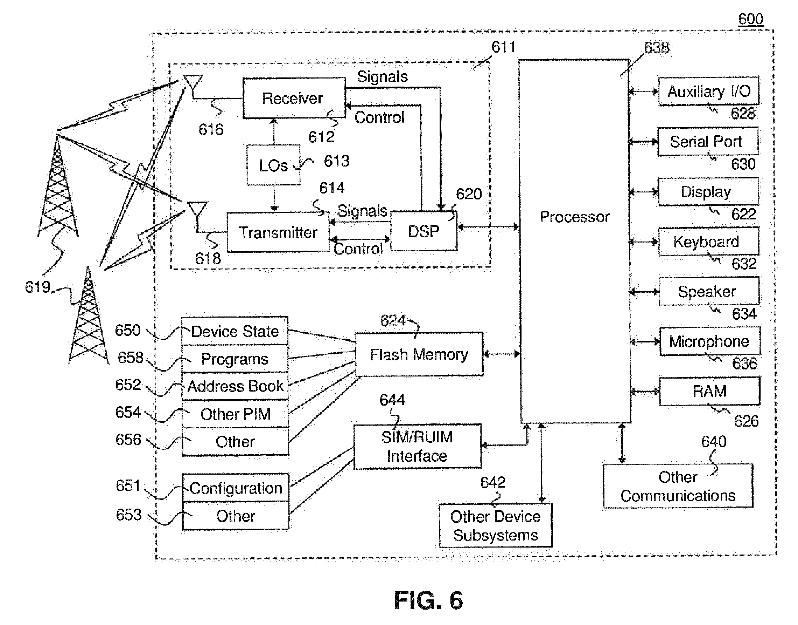

Further, the above may be implemented by any UE. One exemplary device is described below with regard to **Figure 6.**

UE **600** is typically a two-way wireless communication device having voice and data communication capabilities. UE **600** generally has the capability to communicate with other computer systems on the Internet. Depending on the exact functionality provided, the UE may be referred to as a data messaging device, a two-way pager, a wireless e-mail device, a cellular telephone with data messaging capabilities, a wireless Internet appliance, a wireless device, a mobile device, or a data communication device, as examples.

Where UE **600** is enabled for two-way communication, it may incorporate a communication subsystem **611,** including both a receiver **612** and a transmitter **614,** as well as associated components such as one or more antenna arrays **616** and **618,** local oscillators (LOs) **613,** and a processing module such as a digital signal processor (DSP) **620.** As will be apparent to those skilled in the field of communications, the particular design of the communication subsystem **611** will be dependent upon the communication network in which the device is intended to operate. The radio frequency front end of communication subsystem **611** can be any of the embodiments described above.

Network access requirements will also vary depending upon the type of network **619.** In some networks network access is associated with a subscriber or user of UE **600.** A UE may require a removable user identity module (RUIM) or a subscriber identity module (SIM) card in order to operate on a network. The SIM/RUIM interface **644** is normally similar to a card-slot into which a SIM/RUIM card can be inserted and ejected. The SIM/RUIM card can have memory and hold many key configurations **651,** and other information **653** such as identification, and subscriber related information.

When required network registration or activation procedures have been completed, UE **600** may send and receive communication signals over the network **619.** As illustrated in **Figure 6,** network **619** can consist of multiple base stations communicating with the UE.

Signals received by antenna array **616** through communication network **619** are input to receiver **612,** which may perform such common receiver functions as signal amplification, frequency down conversion, filtering, channel selection and the like. A/D conversion of a received signal allows more complex communication functions such as demodulation and decoding to be performed in the DSP **620.** In a similar manner, signals to be transmitted are processed, including modulation and encoding for example, by DSP **620** and input to transmitter **614** for digital to analog conversion, frequency up conversion, filtering, amplification and transmission over the communication network **619** via antenna **array 618.** DSP **620** not only processes communication signals, but also provides for receiver and transmitter control. For example, the gains applied to communication signals in receiver **612** and transmitter **614** may be adaptively controlled through automatic gain control algorithms implemented in DSP **620.**

UE **600** generally includes a processor **638** which controls the overall operation of the device. Communication functions, including data and voice communications, are performed through communication subsystem **611.** Processor **638** also interacts with further device subsystems such as the display **622,** flash memory **624,** random access memory (RAM) **626,** auxiliary input/output (I/O) subsystems **628,** serial port **630,** one or more keyboards or keypads **632,** speaker **634,** microphone **636,** other communication subsystem **640** such as a short-range communications subsystem and any other device subsystems generally designated as **642.** Serial port **630** could include a USB port or other port known to those in the art.

Some of the subsystems shown in **Figure 6** perform communication-related functions, whereas other subsystems may provide "resident" or on-device functions. Notably, some subsystems, such as keyboard **632** and display **622,** for example, may be used for both communication-related functions, such as entering a text message for transmission over a communication network, and device-resident functions such as a calculator or task list.

Operating system software used by the processor **638** may be stored in a persistent store such as flash memory **624,** which may instead be a read-only memory (ROM) or similar storage element (not shown). Those skilled in the art will appreciate that the operating system, specific device applications, or parts thereof, may be temporarily loaded into a volatile memory such as RAM **626.** Received communication signals may also be stored in RAM **626.**

As shown, flash memory **624** can be segregated into different areas for both computer programs **658** and program data storage **650, 652, 654** and **656.** These different storage types indicate that each program can allocate a portion of flash memory **624** for their own data storage requirements. Processor **638,** in addition to its operating system functions, may enable execution of software applications on the UE. A predetermined set of applications that control basic operations, including at least data and voice communication applications for example, will normally be installed on UE **600** during manufacturing. Other applications could be installed subsequently or dynamically.

Applications and software may be stored on any computer readable storage medium. The computer readable storage medium may be a tangible or in transitory/non-transitory medium such as optical (e.g., CD, DVD, etc.), magnetic (e.g., tape) or other memory known in the art.

One software application may be a personal information manager (PIM) application having the ability to organize and manage data items relating to the user of the UE such as, but not limited to, e-mail, calendar events, voice mails, appointments, and task items. Naturally, one or more memory stores would be available on the UE to facilitate storage of PIM data items. Such PIM application may have the ability to send and receive data items, via the wireless network **619.** Further applications may also be loaded onto the UE **600** through the network **619,** an auxiliary I/O subsystem **628,** serial port **630,** short-range communications subsystem **640** or any other suitable subsystem **642,** and installed by a user in the RAM **626** or a nonvolatile store (not shown) for execution by the processor **638.** Such flexibility in application installation increases the functionality of the device and may provide enhanced on-device functions, communication-related functions, or both. For example, secure communication applications may enable electronic commerce functions and other such financial transactions to be performed using the UE **600.**

In a data communication mode, a received signal such as a text message or web page download will be processed by the communication subsystem **611** and input to the processor **638,** which may further process the received signal for output to the display **622,** or alternatively to an auxiliary I/O device **628.**

A user of UE **600** may also compose data items such as email messages for example, using the keyboard **632,** which may be a complete alphanumeric keyboard or telephone-type keypad, among others, in conjunction with the display **622** and possibly an auxiliary I/O device **628.** Such composed items may then be transmitted over a communication network through the communication subsystem **611.**

For voice communications, overall operation of UE **600** is similar, except that received signals would typically be output to a speaker **634** and signals for transmission would be generated by a microphone **636.** Alternative voice or audio I/O subsystems, such as a voice message recording subsystem, may also be implemented on UE **600.** Although voice or audio signal output is generally accomplished primarily through the speaker **634,** display **622** may also be used to provide an indication of the identity of a calling party, the duration of a voice call, or other voice call related information for example.

Serial port **630** in **Figure 6** would normally be implemented in a personal digital assistant (PDA)-type UE for which synchronization with a user's desktop computer (not shown) may be desirable, but is an optional device component. Such a port **630** would enable a user to set preferences through an external device or software application and would extend the capabilities of UE **600** by providing for information or software downloads to UE **600** other than through a wireless communication network. The alternate download path may for example be used to load an encryption key onto the device through a direct and thus reliable and trusted connection to thereby enable secure device communication. As will be appreciated by those skilled in the art, serial port **630** can further be used to connect the UE to a computer to act as a modem.

Other communications subsystems **640,** such as a short-range communications subsystem, is a further optional component which may provide for communication between UE **600** and different systems or devices, which need not necessarily be similar devices. For example, the subsystem **640** may include an infrared device and associated circuits and components or a Bluetooth™ communication module to provide for communication with similarly enabled systems and devices. Subsystem **640** may further include non-cellular communications such as WiFi or WiMAX.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

Furthermore, one or more of the following numbered clauses may describe and relate to further aspects or features within the context of the present teaching:

1. A method of allocating uplink resources for hybrid automatic repeat request acknowledgement at a user equipment (UE), the method comprising:

indicating a first set of uplink resources to the user equipment; and indicating a first subset of the first set of uplink resources that the UE may transmit upon using a position of a first downlink control channel (DCCH) scheduling a downlink shared channel (DSCH) on a cell.

2. The method of clause 1, further comprising indicating a second subset of uplink resources that the UE may transmit upon using downlink control information bits within a remaining downlink control channel that schedules the DSCH on the cell.

3. The method of clause 1, wherein the position of the first DCCH is based on an index of a control channel element within the first DCCH.

4. The method of clause 3, wherein the first DCCH is transmitted by a serving cell.

5. The method of clause 1, wherein the indicating a first subset looks up a set of uplink resources within a table on the user equipment.

6. The method of clause 5, wherein the table is signaled to the user equipment semi-statically.

7. The method of clause 2, wherein the downlink control information bits utilize power control bits.

8. The method of clause 2, further comprising utilizing the same lookup function for both the indicating the first subset and the indicating the second subset.

9. The method of clause 2, further comprising:

assuming the resources from the indicating the first subset are not always identical to the resources from the indicating the second subset; and
utilizing a rule for disambiguation of the first subset and the second subset.

10. The method of clause 9, wherein the rule is to use the DCCH with a lowest control channel element index.

11. The method of clause 9, wherein the rule is to use a DCCH with a particular downlink assignment index.

12. The method of clause 2, further comprising:

assuming the resources from the indicating the first subset are always identical to the resources from the indicating the second subset; and
choosing between the first subset and the second subset at the user equipment.

13. A network element for allocating uplink resources for hybrid automatic repeat request acknowledgement, the network element comprising:

a processor; and
a communications subsystem,
wherein the processor and communications subsystem are configured to: indicate a first set of uplink resources to a user equipment (UE); and
indicate a first subset of the first set of uplink resources that the UE may transmit upon using a position of a first downlink control channel (DCCH) scheduling a downlink shared channel (DSCH) on a cell.

14. The network element of clause 13, wherein the processor and communications subsystem are further configured to indicate a second subset of uplink resources that the UE may transmit upon using downlink control information bits within a remaining downlink control channel that schedules the DSCH on the cell.

15. The network element of clause 13, wherein the position of the first DCCH is based on an index of a control channel element within the first DCCH.

16. The network element of clause 15, wherein the first DCCH is transmitted by a serving cell.

17. The network element of clause 13, wherein the indicating a first subset looks up a set of uplink resources within a table on the user equipment.

18. The network element of clause 17, wherein the table is signaled to the user equipment semi-statically.

19. The network element of clause 14, wherein the downlink control information bits utilize power control bits.

20. The network element of clause 14, wherein the processor and communications subsystem are further configured to utilize the same lookup function for both the indicating the first subset and the indicating the second subset.

21. The network element of clause 14, wherein the processor and communications subsystem are further configured to:

assume the resources from the indicating the first subset are not always identical to the resources from the indicating the second subset; and
utilize a rule for disambiguation of the first subset and the second subset.

22. The network element of clause 21, wherein the rule is to use the DCCH with a lowest control channel element index.

23. The network element of clause 21, wherein the rule is to use a DCCH with a particular downlink assignment index.

24. The network element of clause 14, wherein the processor and communications subsystem are further configured to:

assume the resources from the indicating the first subset are always identical to the resources from the indicating the second subset; and
choose between the first subset and the second subset at the user equipment.

25. A method at a user equipment (UE) for receiving an allocation of uplink resources for hybrid automatic repeat request acknowledgement, the method comprising:

receiving a first set of uplink resources from a network element; and
deriving a first subset of the first set of uplink resources that the UE may transmit upon using a position of a first downlink control channel (DCCH) scheduling a downlink shared channel (DSCH) on a cell.

26. The method of clause 25, further comprising deriving a second subset of uplink resources that the UE may transmit upon using downlink control information bits within a remaining downlink control channel that schedules the DSCH on the cell.

27. The method of clause 25, wherein the position of the first DCCH is based on an index of a control channel element within the first DCCH.

28. The method of clause 27, wherein the first DCCH is received from a serving cell.

29. The method of clause 25, wherein the deriving a first subset looks up a set of uplink resources within a table on the user equipment.

30. The method of clause 29, wherein the table is signaled to the user equipment semi-statically.

31. The method of clause 26, wherein the downlink control information bits utilize power control bits.

32. The method of clause 26, further comprising utilizing the same lookup function for both the deriving the first subset and the deriving the second subset.

33. The method of clause 26, further comprising:

assuming the resources from the deriving the first subset are not always identical to the resources from the deriving the second subset; and
utilizing a rule for disambiguation of the first subset and the second subset.

34. The method of clause 33, wherein the rule is to use the DCCH with a lowest control channel element index.

35. The method of clause 33, wherein the rule is to use a DCCH with a particular downlink assignment index.

36. The method of clause 26, further comprising:

assuming the resources from the deriving the first subset are always identical to the resources from the deriving the second subset; and
choosing between the first subset and the second subset at the user equipment.

37. A user equipment (UE) for receiving an allocation of uplink resources for hybrid automatic repeat request acknowledgement, the user equipment comprising:

a processor; and
a communications subsystem,
wherein the processor and communications subsystem are configured to:

receive a first set of uplink resources from a network element; and
derive a first subset of the first set of uplink resources that the UE may transmit upon using a position of a first downlink control channel (DCCH) scheduling a downlink shared channel (DSCH) on a cell.

38. The user equipment of clause 37, wherein the processor and communications subsystem are further configured to derive a second subset of uplink resources that the UE may transmit upon using downlink control information bits within a remaining downlink control channel that schedules the DSCH on the cell.

39. The user equipment of clause 37, wherein the position of the first DCCH is based on an index of a control channel element within the first DCCH.

40. The user equipment of clause 39, wherein the first DCCH is received from a serving cell.

41. The user equipment of clause 37, wherein the processor and communications subsystem are configured to derive a first subset by looking up a set of uplink resources within a table on the user equipment.

42. The user equipment of clause 41, wherein the table is signaled to the user equipment semi-statically.

43. The user equipment of clause 38, wherein the downlink control information bits utilize power control bits.

44. The user equipment of clause 38, wherein the processor and communications subsystem are further configured to utilize the same lookup function for both the deriving the first subset and the deriving the second subset.

45. The user equipment of clause 38, wherein the processor and communications subsystem are configured to:

assume the resources from the deriving the first subset are not always identical to the resources from the deriving the second subset; and
utilize a rule for disambiguation of the first subset and the second subset.

46. The user equipment of clause 45, wherein the rule is to use the DCCH with a lowest control channel element index.

47. The user equipment of clause 45, wherein the rule is to use a DCCH with a particular downlink assignment index.

48. The user equipment of clause 38, wherein the processor and communications subsystem are configured to:

assume the resources from the deriving the first subset are always identical to the resources from the deriving the second subset; and
choose between the first subset and the second subset at the user equipment.

49. A method of allocating uplink resources for hybrid automatic repeat request acknowledgement at a user equipment (UE), the method comprising:

indicating a first set of uplink resources to the user equipment;
indicating a first subset of the first set of uplink resources that the UE may transmit upon using downlink control information bits within a first downlink control channel that schedules a downlink shared channel (DSCH) on a primary cell, wherein the first downlink control channel is transmitted on the primary cell; and
indicating a second subset of the first set of uplink resources that the UE may transmit upon by downlink control information bits within a second downlink control channel, wherein the uplink resources in the second subset may be the same as the uplink resources in the first subset of uplink resources.

50. The method of clause 49, wherein the downlink control information bits utilize power control bits.

51. The method of clause 50, further comprising deriving power control for an uplink control channel (UCCH) utilizing a cyclic redundancy check masked by a transmission power control bit.

52. The method of clause 51, wherein a single power control bit is used per subframe.

53. The method of clause 52, wherein the single power control bit indicates to the UE to increase or to decrease UCCH power by a single predetermined value.

54. The method of clause 50, wherein at least the first and the second downlink control channels each utilize a cyclic redundancy check masked by a transmission power control bit to derive power control for an uplink control channel (UCCH).

55. The method of clause 54, wherein, if all the cyclic redundancy checks masked by a transmission power control bit are not identical, the method further comprises differentiating between cyclic redundancy checks masked by a transmission power control bit.

56. The method of clause 55, wherein the differentiating selects a cyclic redundancy check masked by a transmission power control bit in one of at least the first and the second downlink control channels with a particular downlink assignment index.

57. The method of clause 55, wherein the differentiating selects a cyclic redundancy check masked by a transmission power control bit in one of at least the first and the second downlink control channels with a smallest control channel element index.

58. The method of clause 54, wherein, if all the cyclic redundancy checks masked by a transmission power control bit are assumed by the UE to be identical, the method further comprises choosing, at the user equipment, the cyclic redundancy check masked by a transmission power control bit to use.

59. The method of clause 50, further comprising deriving power control for an uplink control channel (UCCH) utilizing downlink control information format 3 and 3A.

60. A network element for allocating uplink resources for hybrid automatic repeat request acknowledgement, the network element comprising:

a processor; and
a communications subsystem,
wherein the processor and communications subsystem are configured to:

indicate a first set of uplink resources to a user equipment (UE);

indicate a first subset of the first set of uplink resources that the UE may transmit upon using downlink control information bits within a first downlink control channel that schedules a downlink shared channel (DSCH) on a primary cell, wherein the first downlink control channel is transmitted on the primary cell; and indicate a second subset of the first set of uplink resources that the UE may transmit upon by downlink control information bits within a second downlink control channel, wherein the uplink resources in the second subset may be the same as the uplink resources in the first subset of uplink resources.

61. The network element of clause 60, wherein the downlink control information bits utilize power control bits.

62. The network element of clause 67, wherein the processor and communications subsystem are further configured to provide power control for an uplink control channel (UCCH) utilizing a cyclic redundancy check masked by a transmission power control bit.

63. The network element of clause 62, wherein a single power control bit is used per subframe.

64. The network element of clause 63, wherein the single power control bit indicates to the UE to increase or to decrease UCCH power by a single predetermined value.

65. The network element of clause 61, wherein at least the first and the second downlink control channels each utilize a cyclic redundancy check masked by a transmission power control bit to provide power control for an uplink control channel (UCCH).

66. The network element of clause 65, wherein, if all the cyclic redundancy checks masked by a transmission power control bit are not identical, the processor and communications subsystem are further configured to differentiate between cyclic redundancy checks masked by a transmission power control bit.

67. The network element of clause 66, wherein the differentiating selects a cyclic redundancy check masked by a transmission power control bit in one of at least the first and the second downlink control channels with a particular downlink assignment index.

68. The network element of clause 66, wherein the differentiating selects a cyclic redundancy check masked by a transmission power control bit in one of at least the first and the second downlink control channels with a smallest control channel element index.

69. The network element of clause 65, wherein, if all the cyclic redundancy checks masked by a transmission power control bit are assumed by the UE to be identical, the processor and communications subsystem are further configured to allow the UE to choose the cyclic redundancy check masked by a transmission power control bit to use.

70. The network element of clause 61, wherein the processor and communications subsystem are further configured to provide power control for an uplink control channel (UCCH) utilizing downlink control information format 3 and 3A.

71. A method at a user equipment (UE) for receiving an allocation of uplink resources for hybrid automatic repeat request acknowledgement, the method comprising:

receiving a first set of uplink resources to the user equipment;
deriving a first subset of the first set of uplink resources that the UE may transmit upon using downlink control information bits within a first downlink control channel that schedules a downlink shared channel (DSCH) on a primary cell, wherein the first downlink control channel is received on the primary cell; and
deriving a second subset of the first set of uplink resources that the UE may transmit upon by downlink control information bits within a second downlink control channel, wherein the uplink resources in the second subset may be the same as the uplink resources in the first subset of uplink resources.

72. The method of clause 71, wherein the downlink control information bits utilize power control bits.

73. The method of clause 72, further comprising deriving power control for an uplink control channel (UCCH) utilizing a cyclic redundancy check masked by a transmission power control bit.

74. The method of clause 73, wherein a single power control bit is used per subframe.

75. The method of clause 74, wherein the single power control bit indicates to the UE to increase or to decrease UCCH power by a single predetermined value.

76. The method of clause 72, wherein at least the first and the second downlink control channels each utilize a cyclic redundancy check masked by a transmission power control bit to derive power control for an uplink control channel (UCCH).

77. The method of clause 76, wherein, if all the cyclic redundancy checks masked by a transmission power control bit are not identical, the method further comprises differentiating between cyclic redundancy checks masked by a transmission power control bit.

78. The method of clause 77, wherein the differentiating uses a cyclic redundancy check masked by a transmission power control bit in one of at least the first and the second downlink control channels with a particular downlink assignment index.

79. The method of clause 77, wherein the differentiating uses a cyclic redundancy check masked by a transmission power control bit in one of at least the first and the second downlink control channels with a smallest control channel element index.

80. The method of clause 76, wherein, if all the cyclic redundancy checks masked by a transmission power control bit are assumed by the UE to be identical, the method further comprises choosing, at the user equipment, the cyclic redundancy check masked by a transmission power control bit to use.

81. The method of clause 72, further comprising deriving power control for an uplink control channel (UCCH) utilizing downlink control information format 3 and 3A.

82. A user equipment (UE) for receiving an allocation of uplink resources for hybrid automatic repeat request acknowledgement, the user equipment comprising:

    a processor; and
    a communications subsystem,
    wherein the processor and communications subsystem are configured to: receive a first set of uplink resources to the user equipment;
    derive a first subset of the first set of uplink resources that the UE may transmit upon using downlink control information bits within a first downlink control channel that schedules a downlink shared channel (DSCH) on a primary cell, wherein the first downlink control channel is received on the primary cell; and
    derive a second subset of the first set of uplink resources that the UE may transmit upon by downlink control information bits within a second downlink control channel, wherein the uplink resources in the second subset may be the same as the uplink resources in the first subset of uplink resources.

83. The user equipment of clause 82, wherein the downlink control information bits utilize power control bits.

84. The user equipment of clause 83, wherein the processor and communications subsystem are further configured to derive power control for an uplink control channel (UCCH) utilizing a cyclic redundancy check masked by a transmission power control bit.

85. The user equipment of clause 84, wherein a single power control bit is used per subframe.

86. The user equipment of clause 85, wherein the single power control bit indicates to the UE to increase or to decrease UCCH power by a single predetermined value.

87. The user equipment of clause 83, wherein at least the first and the second downlink control channels each utilize a cyclic redundancy check masked by a transmission power control bit to derive power control for an uplink control channel (UCCH).

88. The user equipment of clause 87, wherein, if all the cyclic redundancy checks masked by a transmission power control bit are not identical, the  processor and communications subsystem are further configured to differentiate between cyclic redundancy check masked by a transmission power control bit.

89. The user equipment of clause 88, wherein the differentiating uses a cyclic redundancy check masked by a transmission power control bit in one of at least the first and the second downlink control channels with a particular downlink assignment index.

90. The user equipment of clause 88, wherein the differentiating uses a cyclic redundancy check masked by a transmission power control bit in one of at least the first and the second downlink control channels with a smallest control channel element index.

91. The user equipment of clause 87, wherein, if all the cyclic redundancy checks masked by a transmission power control bits are assumed by the UE to be identical, the processor and communications subsystem are further configured to choose the cyclic redundancy check masked by a transmission power control bit to use.

92. The user equipment of clause 83, wherein the processor and communications subsystem are further configured to derive power control for an uplink control channel (UCCH) utilizing downlink control information format 3 and 3A.

**Claims**

1. A method of allocating uplink resources for hybrid automatic repeat request acknowledgement at a user equipment (UE), the method comprising:

   indicating a first set of uplink resources to the user equipment; and
   indicating a first subset of the first set of uplink resources that the UE may transmit upon using a position of a first downlink control channel (DCCH) scheduling a downlink shared channel (DSCH) on a cell.

2. The method of claim 1, further comprising indicating a second subset of uplink resources that the UE may transmit upon using downlink control information bits within a remaining downlink control channel that schedules the DSCH on the cell.

3. The method of claim 1 or 2, wherein the position of the first DCCH is based on an index of a control channel element within the first DCCH.

4. The method of claim 2, wherein the downlink control information bits utilize power control bits.

5. The method of claim 2 or 4, further comprising utilizing the same lookup function for both the indicating the first subset and the indicating the second subset.

6. The method of any of claims 2, 4, and 5, further comprising:

   assuming the resources from the indicating the first subset are not always identical to the resources from the indicating the second subset; and
   utilizing a rule for disambiguation of the first subset and the second subset.

7. A network element for allocating uplink resources for hybrid automatic repeat request acknowledgement, the network element comprising:

   a processor; and
   a communications subsystem,

   wherein the processor and communications subsystem are configured to:

   perform the method of any of claims 1 to 6.

8. A method at a user equipment (UE) for receiving an allocation of uplink resources for hybrid automatic repeat request acknowledgement, the method comprising:

   receiving a first set of uplink resources from a network element; and
   deriving a first subset of the first set of uplink resources that the UE may transmit upon using a position of a first downlink control channel (DCCH) scheduling a downlink shared channel (DSCH) on a cell.

9. The method of claim 8, further comprising deriving a second subset of uplink resources that the UE may transmit upon using downlink control information bits within a remaining downlink control channel that schedules the DSCH on the cell.

10. The method of claim 8 or 9, wherein the position of the first DCCH is based on an index of a control channel element within the first DCCH.

11. The method of claim 9, wherein the downlink control information bits utilize power control bits.

12. The method of claim 9 or 11, further comprising utilizing the same lookup function for both the deriving the first subset and the deriving the second subset.

13. The method of any of claims 9, 11 and 12, further comprising:

assuming the resources from the deriving the first subset are not always identical to the resources from the deriving the second subset; and
utilizing a rule for disambiguation of the first subset and the second subset.

14. A user equipment (UE) for receiving an allocation of uplink resources for hybrid automatic repeat request acknowledgement, the user equipment comprising:

a processor; and
a communications subsystem,

wherein the processor and communications subsystem are configured to:

perform the method of any of claims 8 to 13.

**FIG. 1**

**PCell PDCCH**

**PUCCH**

| |
|---|
| $n_{CCE,i} = 0$ |
| UE Specific Search Space (at Subframe k) **230** |
| $n_{CCE,i} = L$ |
| $n_{CCE,i} = L + 1$ |
| |
| $n_{CCE,i} = N_{CCE,k} - 1$ |

Implicit PUCCH Resource **210**

| |
|---|
| PRB#1 |
| PRB#2 |
| Imp. Resource 1,2 |
| PRB#3 |
| ARI Resource 1,2 |
| ARI Resource 3,4 |
| ARI Resource 5,6 |
| ARI Resource 7,8 |
| PRB#4 |

} 2 Resources

} 2 Resources

Explicit Resource from ARI **220**

# FIG. 2

FIG. 3

EP 2 696 526 A2

FIG. 4

FIG. 5

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61556356 B
- US 61522434 A
- US 24863811 A

- US 61541848 A
- US 61555572 A

**Non-patent literature cited in the description**

- 3rd Generation Partnership Project; Technical Specification Group Radio Access Network; Evolved Universal Terrestrial Radio Access (E-UTRA); Physical Layer Procedures (Release 10). *3GPP TS 36.213 V10.1.0,* March 2011
- 3rd Generation Partnership Project; Technical Specification Group Radio Access Network; Evolved Universal Terrestrial Radio Access (E-UTRA); Physical Channels and Modulation (Release 10). *3GPP TS 36.211 V10.1.0,* March 2011

- 3rd Generation Partnership Project; Technical Specification Group Radio Access Network; Evolved Universal Terrestrial Radio Access (E-UTRA); Radio Resource Control (RRC); Protocol specification (Release 10). *3GPP TS 36.331 V10.1.0,* March 2011